# EUROPÄISCHE PATENTSCHRIFT

(11) **EP 1 102 037 B1**
(45) Veröffentlichungstag und Bekanntmachung des Hinweises auf die Patenterteilung: **07.01.2009**
(21) Anmeldenummer: 00123454.1
(22) Anmeldetag: 06.11.2000
(51) Int. Cl.: G01C 21/36

(54) **Navigationssystem mit verbesserter Objektauswahl**
Navigation system with improved object selection
Système de navigation à sélection d'objets améliorée

(30) Priorität: 22.11.1999 DE 19956112
(43) Veröffentlichungstag der Anmeldung: 23.05.2001
(73) Patentinhaber: Continental Automotive GmbH, 30165 Hannover (DE)
(72) Erfinder: Völkel, Andreas, 35619 Braunfels (DE)

(56) Entgegenhaltungen:
- EP-A- 0 720 003
- EP-A- 0 829 704
- EP-A- 0 836 167
- JP-A- 9 292 831
- US-A- 5 424 951
- PATENT ABSTRACTS OF JAPAN vol. 1999, no. 03, 31. März 1999 (1999-03-31) -& JP 10 326075 A (N T T TELECA:KK), 8. Dezember 1998 (1998-12-08)

## Beschreibung

Die Erfindung betrifft ein Navigationssystem eines Kraftfahrzeuges mit einer Recheneinheit zur Berechnung einer Route zwischen einem Start- und einem Zielort, einem mit der Recheneinheit verbundenen Speichermedium mit Kartendaten und Daten zu weiteren Objekten (POI), mit der Recheneinheit verbundene Mittel zur Bestimmung der Fahrzeugposition, einer mit der Recheneinheit verbundenen Eingabeeinheit, einer mit der Recheneinheit verbundenen optischen Ausgabeeinheit, wobei auf der optischen Ausgabeeinheit eine Auswahlliste mit den weiteren Objekten und eine Landkarte mit Anzeige von Straßen, der gegenwärtigen Fahrzeugposition sowie zumindest der Position eines der weiteren Objekte aus der Auswahlliste darstellbar sind.

Ein derartiges Navigationssystem ist aus der EP 0 720 003 A1 und der US 5,424,951 bekannt. Bei diesen bekannten Navigationssystemen kann auf einer Landkartendarstellung außer den Straßen und der Position des Fahrzeuges auch die Position von weiteren Objekten von besonderer Bedeutung, sogenannten "points of interest" (POI), dargestellt werden. Solche Objekte, bei denen es sich beispielsweise um Restaurants, Hotels oder dergleichen handeln kann, können aus einer Auswahlliste ausgewählt werden. Zur Darstellung der Auswahlliste wird die Kartendarstellung verlassen. In der Liste kann der Benutzer einzelne Objekte markieren, deren Position in der Karte angezeigt werden soll. Eine solche Auswahl kann jedoch auch automatisch erfolgen, indem beispielsweise die Objekte einer ausgewählten Kategorie in der Karte dargestellt werden, deren Entfernung von der gegenwärtigen Position des Fahrzeugs kleiner ist als ein Vorgabewert. Weiterhin kann in der Kartendarstellung auch eine Priorität des dargestellten Objekts angezeigt werden, die beispielsweise von der Entfernung des Objekts von der Fahrzeugposition abhängt. Nach der Listenauswahl erfolgt die Rückkehr zur Kartendarstellung.

Nachteilig ist bei den bekannten Navigationssystemen, dass der Benutzer zunächst aus der Liste die gewünschten Objekte auswählt und erst dann, nach Schließen der Liste, die Darstellung der Landkarte mit den ausgewählten Objekten erfolgt. Eine sofortige Kontrolle der Position der ausgewählten Objekte ist somit nicht möglich.

Aus der JP 09292831 A ist ein Navigationssystem bekannt, bei dem auf einer Ausgabeeinheit gleichzeitig eine Landkarte und eine Liste mit Objekten dargestellt wird, wobei für jedes der Objekte der Liste ein Symbol in der Landkarte an der geographischen Position des Objekts innerhalb der Landkarte dargestellt wird. Es erfolgt weiterhin eine optische Zuordnung zwischen einem ausgewählten Objekt der Liste und dem zugehörigen Symbol.

Aus der EP 0 836 167 A1 ist eine geteilte Bildschirmdarstellung mit einer Karten- und einer Listendarstellung bekannt, wobei Objekte einer bestimmten Kategorie (hier: Tankstellen einer bestimmten Tankstellenkette) ausgewählt und in der Karte an ihrer geographischen Position dargestellt werden.

Aufgabe der Erfindung ist es, dem Fahrer schnellstmöglich eine Information über die Position der ausgewählten Objekte zu geben, ohne die Kartendarstellung unnötig zu beeinträchtigen.

Die Aufgabe wird durch ein Navigationssystem mit den Merkmalen des Anspruchs 1 gelöst.

Somit ergibt sich der Vorteil, dass ein von dem Benutzer anhand bestimmter Kriterien aus der Auswahlliste ausgewähltes Objekt sofort für den Fahrer hinsichtlich seiner Position dargestellt werden kann. Bei Auswahl mehrerer Objekte ist es besonders vorteilhaft, wenn eine optische Zuordnung zwischen den ausgewählten Listeneinträgen und den zugehörigen, auf der Landkarte dargestellten Objekten erfolgt. Dies kann beispielsweise durch unterschiedliche Farben der Objektdarstellung oder im einfachsten Fall durch eine Verbindungslinie zwischen dem Objekt und dem Listeneintrag erfolgen.

In einer weiteren Ausgestaltung der Erfindung ist vorgesehen, dass mehrere Objekte der Liste in der Landkarte dargestellt sind und das aktuell in der Liste markierte Objekt in der Landkarte hervorgehoben ist. Das Hervorheben des markierten Objekts in der Landkarte kann dabei insbesondere durch Blinken oder eine erhöhte Helligkeit des Objektes erfolgen. In beiden Fällen hebt sich das markierte Objekt deutlich von den anderen Objekten ab und kann auch bei Verwendung eines Monochrombildschirmes vom Benutzer klar erkannt werden. Bei Verwendung eines Farbbildschirms ist es darüber hinaus möglich, nur das gerade ausgewählte Objekt mit einer anderen Farbe zu versehen und daher von den weiteren Objekten zu unterscheiden.

Das bei den bekannten Navigationssystemen erforderliche Hin-und Herspringen zwischen der Listendarstellung und der Landkarte entfällt bei dem erfindungsgemäßen Navigationssystem vollständig. Hierdurch ist es für den Fahrer z. B. einfach möglich, die geographische Position mehrerer Objekte der Reihe nach abzuklären und schließlich das am besten geeignete auszuwählen.

Die Auswahl eines bestimmten Objekts aus der Liste kann auf verschiedene Weise erfolgen. Die Auswahl kann beispielsweise dadurch erfolgen, dass ein Cursor durch Bedienung der Eingabeeinheit in der Liste bewegt wird. Die Eingabeeinheit kann hierbei direkt mit der Ausgabeeinheit in einem einzigen Gehäuse untergebracht sein, jedoch ist es auch möglich, die Eingabeeinheit als Fernbedienung auszubilden und beispielsweise eine Funk- oder Infrarotverbindung vorzusehen.

In einer weiteren vorteilhaften Ausgestaltung ist die Ausgabeeinheit als berührungsempfindlicher Bildschirm (sog. touch-screen) ausgebildet und die Auswahl eines speziellen Objekts aus der Liste erfolgt durch Berühren des Bildschirms an dem Ort an dem der Listeneintrag dargestellt ist.

In einer weiteren Ausführungsvariante ist vorgesehen, dass die Auswahl von Objekten aus der Liste durch Sprachsteuerung erfolgt. Die Auswahl kann dabei beispielsweise durch einfache Befehle wie "unten" oder "oben" erfolgen, wobei ein Cursor in der Liste nach unten oder oben bewegt und somit jeweils das nächste Objekt ausgewählt wird. Darüber hinaus ist es auch möglich, für die Ausgabe der Position des Objektes auf der Landkarte einen separaten Befehl (z.B. "anzeigen") vorzusehen. Alternativ kann die Auswahl über Sprachsteuerung auch über Indexziffern erfolgen, so dass beispielsweise durch den Sprachbefehl "drei" der dritte Eintrag in der Liste ausgewählt wird. Eine Anzeige der Indexziffern ist dabei nicht zwingend erforderlich.

Die Erfindung wird nachfolgend anhand von Ausführungsbeispielen und der Zeichnung näher erläutert.

Es zeigen:
- Fig. 1:: die wesentlichen Komponenten eines Navigations-systems,
- Fig. 2:: die Bildschirmdarstellung nach einer Ausführungsform,
- Fig. 3:: die Bildschirmdarstellung mit nicht erfindungs-gemäßer Darstellung aller Objekte der Auswahlliste,
- Fig. 4:: ein Ablaufdiagramm eines Verfahrens zur direkten Darstellung eines ausgewählten Objekts.

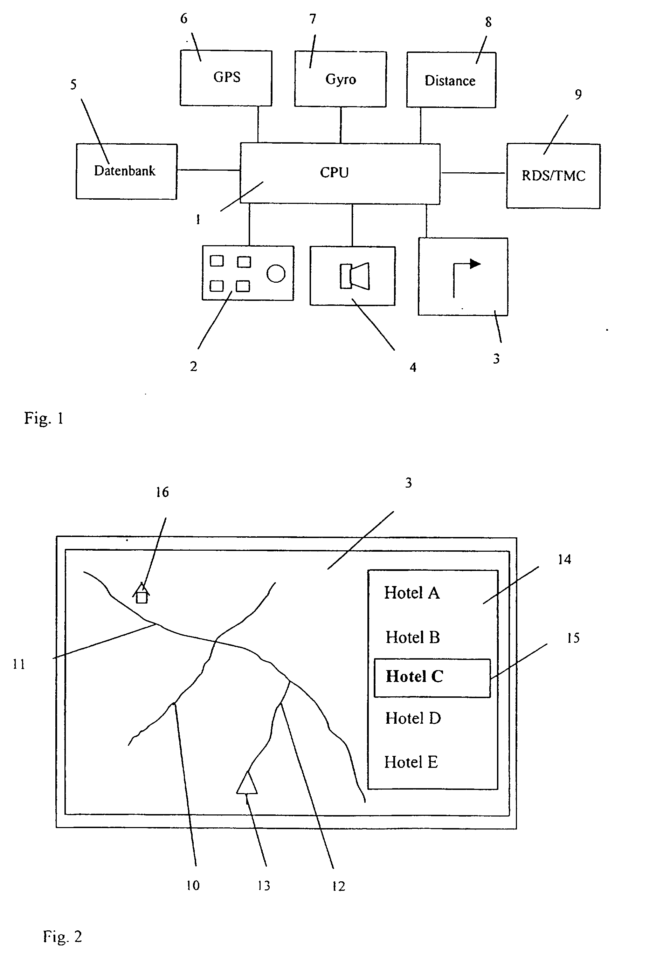

In Figur 1 sind die Komponenten eines Navigationssystems für Kraftfahrzeuge schematisch dargestellt. Zentraler Bestandteil des Navigationssystems ist die Recheneinheit (CPU) 1, die auch die erforderlichen Speicherelemente enthält. Mit der CPU 1 ist eine Bedieneinheit 2 verbunden, über die beispielsweise der Zielort eingegeben oder ausgewählt werden kann. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht. Mit der CPU 1 ist eine optische Ausgabeeinheit 3 verbunden, über die Zielführungsinformationen und sonstige Informationen ausgegeben werden. Die Zielführungsinformationen können weiterhin über einen Lautsprecher 4 akustisch ausgegeben werden. Die CPU 1 ist ferner mit einer Datenbank 5 verbunden, die die Landkartendaten und beispielsweise auch die Daten der weiteren Objekte enthält. Diese Daten sind beispielsweise auf einer CD-ROM abgespeichert. In diesem Falle enthält das Navigationssystem ein CD-ROM Laufwerk, das mit der CPU 1 verbunden ist. Anhand der Landkartendaten kann von der CPU 1 bei bekanntem Start- und Zielort in bekannter Weise eine Berechnung der optimalen Route durchgeführt werden, die dann über die optische Ausgabeeinheit 3 ausgegeben werden kann. Zur Bestimmung der aktuellen Fahrzeugposition enthält das Navigationssystem ferner einen Empfänger 6 zum Empfang von Satellitennavigationssignalen. Um eine von Satelliten unabhängige Positionsbestimmung durchführen zu können, enthält das Navigationssystem ferner einen Richtungssensor 7 und einen Wegsensor 8, die ebenfalls mit der CPU 1 verbunden sind, so dass mit Hilfe eines geeigneten Computerprogrammes mit diesen Signalen eine Positionsbestimmung möglich ist. Ferner ist die CPU 1 im dargestellten Beispiel zusätzlich mit einem Rundfunkempfänger 9 verbunden, der zum Empfang von RDS/TMC Signalen ausgebildet ist. Somit können empfangene Verkehrsinformationen vom Rundfunkempfänger 9 an die CPU 1 weitergeleitet und zur Berücksichtigung bei der Routenberechnung herangezogen werden. Alternativ können die Verkehrsinformationen auch über ein Mobilfunkgerät, insbesondere nach dem GSM-Standard, empfangen und an die Recheneinheit weitergeleitet werden. Entsprechende dynamische Navigationssysteme sind bekannt.

In Figur 2 ist die optische Ausgabeeinheit 3 mit der erfindungsgemäßen Bildschirmdarstellung näher dargestellt. Die Bildschirmdarstellung enthält eine Landkarte mit den Straßen 10, 11 und 12. Weiterhin ist die gegenwärtige Position 13 des Fahrzeuges dargestellt. Daneben ist auf dem Bildschirm eine Auswahlliste 14 dargestellt, die in diesem Beispiel verschiedene Hotels enthält. Über die Eingabeeinheit 2 kann der Fahrer nun ein bestimmtes Hotel, das seinen Vorstellungen am nächsten kommt, auswählen. Hierzu sind in der Liste weitere Informationen zu den einzelnen Hotels abgelegt, die aus Gründen der Übersichtlichkeit in der Fig. 2 nicht dargestellt sind. Im Beispiel der Fig. 2 wurde das Hotel C ausgewählt, was durch den Rahmen 15 angedeutet ist. Gleichzeitig mit der Auswahl des Hotels C durch den Fahrer, wird die Position 16 des ausgewählten Hotels mit Hilfe eines entsprechenden Symbols in der Kartendarstellung angezeigt. Sagt dem Benutzer die Lage dieses Hotels z. B. nicht zu, weil es zu weit abseits seiner Strecke liegt, so kann er sofort ein weiteres

Hotel aus der Liste 14 auswählen, wobei dann dessen Position in der Kartendarstellung angezeigt wird.

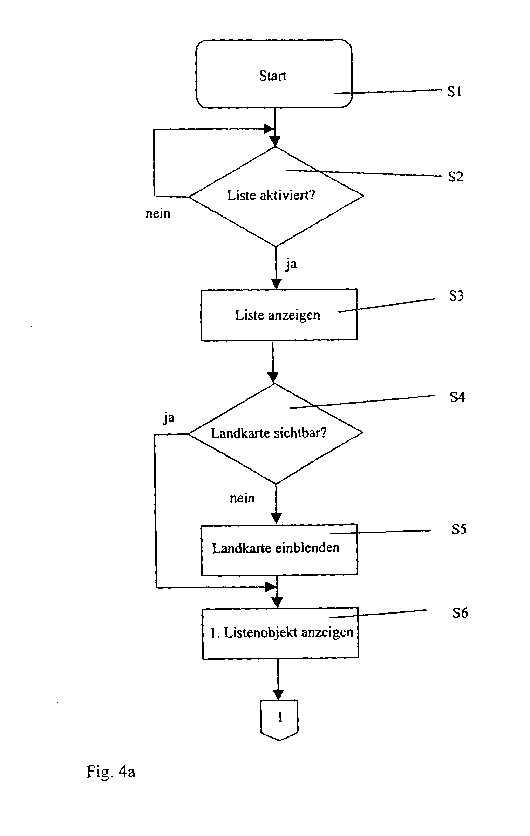

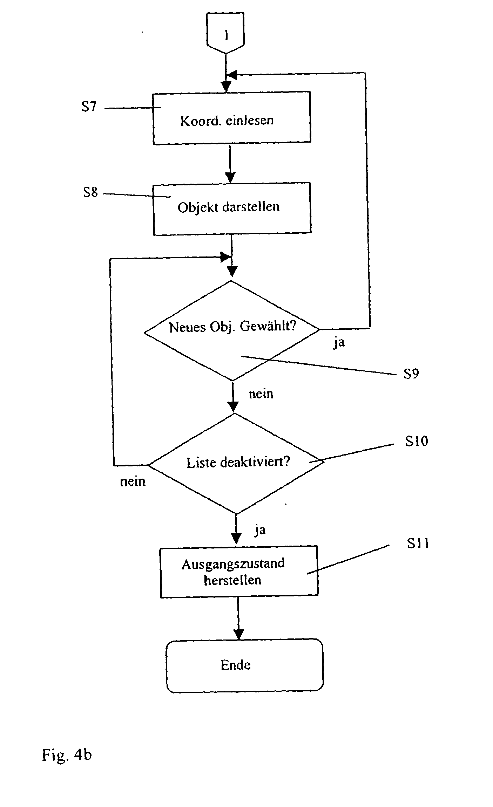

Die Anzeige auf der Ausgabeeinheit 3 wird über ein entsprechendes Computerprogramm gesteuert, das in der CPU 1 abgearbeitet wird. In Figur 4 ist ein entsprechendes Verfahren mit den für die Erfindung relevanten Teilen als Ablaufdiagramm dargestellt. In Schritt S1 erfolgt der Start des Programms. In Schritt S2 erfolgt eine Abfrage ob die Auswahlliste aktiviert wurde. Die Aktivierung der Auswahlliste kann beispielsweise durch Betätigung eines entsprechenden Bedienelements der Bedieneinheit 2 erfolgen. Wurde die Auswahlliste, beispielsweise für Hotels, aktiviert, so wird in Schritt S3 die Liste auf dem Bildschirm angezeigt. Anschließend wird in Schritt S4 geprüft, ob die Landkarte bereits sichtbar ist. Fall dies nicht der Fall ist, so wird in Schritt S5 die Landkarte eingeblendet. In Schritt S6 wird dann automatisch ein erstes Listenelement in der Listendarstellung angezeigt bzw. optisch hervorgehoben.

Die Koordinaten des ausgewählten Objekts werden aus der Datenbank 5 in die CPU 1 eingelesen (S7) und durch die CPU 1 derart aufbereitet, dass eine Ausgabe eines graphischen Symbols mit den Koordinaten des ausgewählten Objekts in der Kartendarstellung erfolgt (S8). Anschließend erfolgt eine Abfrage, ob ein neues Objekt gewählt wurde (S9). Ist dies der Fall, so werden auch dessen Koordinaten eingelesen und das Objekt wird graphisch in der Landkarte dargestellt. Erfindungsgemäß wird somit die Zahl der dargestellten Objekte in der Landkarte kontinuierlich erhöht.

In einer wicht erfindungsgemäß Ausführungsform ist zwischen Schritt S9 und Schritt S7 ein weiterer Schritt eingeführt, in dem das zuvor ausgewählte Objekt aus der Landkarte wieder gelöscht wird. Bei dieser Ausführungsform wird somit stets nur das gerade aktuell markierte Objekt in der Landkarte dargestellt.

Wurde in Schritt S9 kein neues Objekt gewählt, so wird geprüft, ob die Liste inzwischen deaktiviert wurde (Schritt S10), d. h. ob der Fahrer durch Betätigen der Bedieneinheit 2 den Befehl gegeben hat, die Listendarstellung wieder zu schließen. Ist dies der Fall, so wird der Ausgangszustand der Anzeige, wie er in Schritt S1 vorgelegen hat, wieder hergestellt und das Programm beendet. Anschließend können beispielsweise Zielführungsinformationen zu einem ausgewählten Zielort ausgegeben werden.

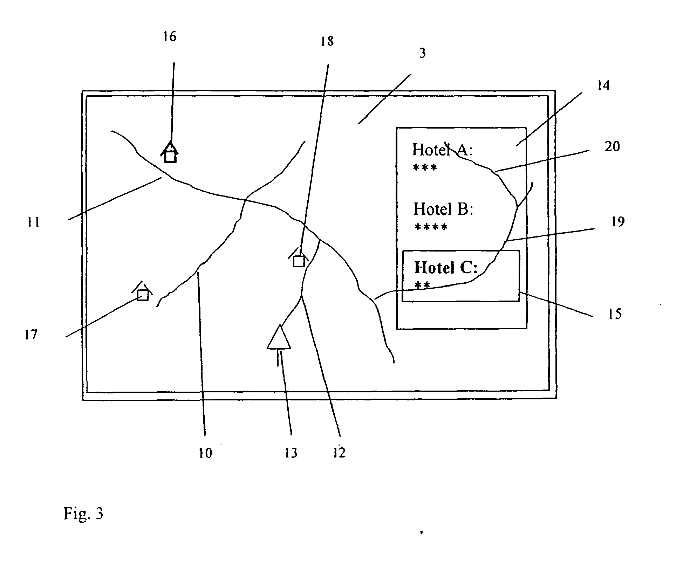

In Figur 3 ist eine Anzeigeform dargestellt, bei der in nicht erfindungsgemäßer Weise alle Objekte aus der gewählten Auswahlliste, die innerhalb des dargestellten Kartenabschnitts liegen, auf der Karte dargestellt werden. Der Fahrer kann aber auch hier eines der Objekte, beispielsweise das Hotel C auswählen, wobei dann die Darstellung des ausgewählten Objektes 16 in der Karte unterschiedlich zur Darstellung der anderen nicht ausgewählten Objekte 17, 18 erfolgt. Diese Unterscheidung kann beispielsweise durch Blinken des Objektsymbols, durch eine größere Helligkeit des Objektsymbols oder dergleichen erfolgen. Bei Farbbildschirmen ist insbesondere auch eine andersfarbige Darstellung des ausgewählten Objektsymbols möglich. In der in Figur 3 gezeigten Ausführungsform erfolgt die Listendarstellung halbtransparent als Overlay über die Landkarte, so dass auch noch weitere Straßen 19, 20, die sonst von der Liste abgedeckt würden, sichtbar sind.

Die Erfindung wurde anhand von Ausführungsbeispielen erläutert, jedoch ist die Erfindung nicht an ein spezielles Navigationssystem gebunden.

## Patentansprüche

1. Navigationssystem eines Kraftfahrzeugs mit
- einer Recheneinheit (1) zur Berechnung einer Route zwischen einem Start- und einem Zielort,
- einem mit der Recheneinheit (1) verbundenen Speichermedium (Datenbank 5) mit Kartendaten und Daten zu weiteren Objekten (POI),
- mit der Recheneinheit (1) verbundenen Mitteln (6, 7, 8) zur Bestimmung der Fahrzeugposition,
- einer mit der Recheneinheit (1) verbundenen Eingabeeinheit (2),
- einer mit der Recheneinheit (1) verbundenen optischen Ausgabeeinheit (3), wobei auf der optischen Ausgabeeinheit (3) gleichzeitig eine Auswahlliste (14) mit den weiteren Objekten und eine Landkarte mit Anzeige von Straßen (10-12, 19, 20), der gegenwärtigen Fahrzeugposition (13) sowie der Position der weiteren Objekte (16) aus der Auswahlliste (14) darstellbar sind, **dadurch gekennzeichnet, dass** das aktuell in der Liste ausgewählte Objekt ein Einzelobjekt ist und zusätzlich zu zuvor ausgewählten Objekten der Liste in der Landkarte darstellbar ist.

2. Navigationssystem nach Anspruch 1, **dadurch gekennzeichnet, dass** eine optische Zuordnung zwischen ausgewählten Listeneinträgen und den zugehörigen auf der Landkarte dargestellten Objekten erfolgt.

3. Navigationssystem nach Anspruch 1 oder 2, **dadurch gekennzeichnet, dass** mehrere Objekte der Liste in der Landkarte dargestellt sind und das aktuell in der Liste markierte Objekt in der Landkarte hervorgehoben ist. Liste markierte Objekt in der Landkarte hervorgehoben ist.

4. Navigationssystem nach Anspruch 3, **dadurch gekennzeichnet, dass** das Hervorheben durch Blinken, erhöhte Helligkeit oder die Farbe des Objekts erfolgt.

5. Navigationssystem nach einem der vorhergehenden Ansprüche, **dadurch gekennzeichnet, dass** es sich bei der Ausgabeeinheit (3) um einen berührungsempfindlichen Bildschirm (touch-screen) handelt und die Auswahl eines Objekts durch Berühren des Bildschirms erfolgt.

6. Navigationssystem nach einem der vorhergehenden Ansprüche, **dadurch gekennzeichnet, dass** die Auswahl von Objekten aus der Liste über die Eingabeeinheit (2) erfolgt.

7. Navigationssystem nach einem der vorhergehenden Ansprüche, **dadurch gekennzeichnet, dass** die Auswahl von Objekten aus der Liste durch Sprachsteuerung erfolgt.

8. Navigationssystem nach einem der vorhergehenden Ansprüche, **dadurch gekennzeichnet, dass** die Listendarstellung halbtransparent erfolgt.

## Claims

1. Navigation system of a motor vehicle having
- a computing unit (1) for calculating a route between a starting location and a destination,
- a memory medium (database 5) which is connected to the computing unit (1) and has map data and data relating to further objects (POI),
- means (6, 7, 8) which are connected to the computing unit (1) and have the purpose of determining the position of the vehicle,
- an input unit (2) which is connected to the computing unit (1),
- a visual display unit (3) which is connected to the computing unit (1), wherein a selection list (14) with the further objects and a map with indication of roads (10-12, 19, 20), the current position (13) of the vehicle and the position of the further objects (16) from the selection list (14) can be displayed simultaneously on the visual display unit (3), **characterized in that** the object which is currently selected in the list is an individual object and it can be displayed in addition to previously selected objects from the list on the map.

2. Navigation system according to Claim 1, **characterized in that** a visual assignment is made between selected list entries and the associated objects displayed on the map.

3. Navigation system according to Claim 1 or 2, **characterized in that** a plurality of objects from the list are displayed on the map, and the object which is currently marked in the list is highlighted on the map.

4. Navigation system according to Claim 3, **characterized in that** the highlighting is carried out by flashing, increased brightness or through the colour of the object.

5. Navigation system according to one of the preceding claims, **characterized in that** the display unit (3) is a touch-sensitive screen (touch screen), and an object is selected by touching the screen.

6. Navigation system according to one of the preceding claims, **characterized in that** the selection of objects from the list is carried out by means of the input unit (2).

7. Navigation system according to one of the preceding claims, **characterized in that** the selection of objects from the list is carried out through voice control.

8. Navigation system according to one of the preceding claims, **characterized in that** the list is displayed semi-transparently.

## Revendications

1. Système de navigation pour véhicule automobile, comportant
- une unité de calcul (1) permettant de calculer un itinéraire entre un lieu de départ et un lieu de destination,
- un milieu de stockage (banque de données 5) relié à l'unité de calcul (1) et renfermant des données de cartes routières et des données relatives à d'autres objets (POI ou Points Intéressants),
- des moyens (6, 7, 8) reliés à l'unité de calcul (1) et destinés à la détermination de la position du véhicule,
- une unité de saisie (2) reliée à l'unité de calcul (1),
- une unité optique de sortie (3) reliée à l'unité de calcul (1), une liste offerte à la sélection (14) pouvant être affichée sur l'unité optique de sortie (3) simultanément avec les autres objets et avec une carte routière avec un affichage des routes (10-12), 19, 20), de la position du véhicule (13) en temps réel, ainsi que de la position des autres objets (16) faisant partie de la liste offerte à la sélection (14),
**caractérisé par le fait que**
l'objet justement sélectionné sur la liste est un objet individuel et qu'il peut être représenté sur la carte routière en plus des objets sélectionnés auparavant.

2. Procédé selon la revendication 1, **caractérisé par le fait qu**'il se produit une concordance optique entre des inscriptions sur la liste qui ont été sélectionnées et les objets correspondants représentés sur la carte routière.

3. Procédé selon la revendication 1 ou 2, **caractérisé par le fait que** plusieurs objets de la liste sont représentés sur la carte routière et que l'objet qui est justement marqué dans la liste est mis optiquement en valeur sur la carte routière.

4. Procédé selon la revendication 3, **caractérisé par le fait que** la mise en valeur se fait par clignotement, par surbrillance ou par la coloration de l'objet.

5. Procédé selon l'une des revendications précédentes, **caractérisé par le fait que** l'unité de sortie (3) est un écran tactile (touch-screen) et que la sélection d'un objet se fait par contact avec l'écran.

6. Procédé selon l'une des revendications précédentes, **caractérisé par le fait que** la sélection d'objets sur la liste se fait par l'intermédiaire de l'unité de sortie (2).

7. Procédé selon l'une des revendications précédentes, **caractérisé par le fait que** la sélection d'objets sur la liste se fait par commande vocale.

8. Procédé selon l'une des revendications précédentes, **caractérisé par le fait que** la représentation de la liste se fait en semi-transparence.
